(19) Europäisches Patentamt
European Patent Office
Office européen des brevets

(11) **EP 3 022 856 B1**

(12) **EUROPÄISCHE PATENTSCHRIFT**

(45) Veröffentlichungstag und Bekanntmachung des Hinweises auf die Patenterteilung:
**14.07.2021 Patentblatt 2021/28**

(21) Anmeldenummer: **14758813.1**

(22) Anmeldetag: **20.08.2014**

(51) Int Cl.:
*H04J 3/06* (2006.01)     *H04J 3/14* (2006.01)
*H04L 12/24* (2006.01)

(86) Internationale Anmeldenummer:
**PCT/EP2014/067768**

(87) Internationale Veröffentlichungsnummer:
**WO 2015/036213 (19.03.2015 Gazette 2015/11)**

(54) **VERFAHREN ZUR LOKALISIERUNG EINER FREQUENZABWEICHUNG IN EINEM KOMMUNIKATIONSNETZ UND ENTSPRECHENDES KOMMUNIKATIONSNETZ**

METHOD FOR LOCALIZATION OF A FREQUENCY DEVIATION IN A COMMUNICATION NETWORK AND CORRESPONDING COMMUNICATION NETWORK

PROCEDE DE LOCALISATION D'UNE DEVIATION DE FREQUENCE DANS UN RESEAU DE COMMUNICATION ET RESEAU DE COMMMUNICATION CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.09.2013 DE 102013218328**

(43) Veröffentlichungstag der Anmeldung:
**25.05.2016 Patentblatt 2016/21**

(73) Patentinhaber: **Siemens Aktiengesellschaft**
**80333 München (DE)**

(72) Erfinder:
• **BUHL, Michael Bernhard**
**85567 Grafing (DE)**
• **OBRADOVIC, Dragan**
**85521 Ottobrunn (DE)**
• **STEINDL, Günter**
**92284 Poppenricht (DE)**
• **WOLFRUM, Philipp**
**81539 München (DE)**

(56) Entgegenhaltungen:
**EP-A1- 2 037 602**

• **SCHEITERER R L ET AL: "Synchronization Performance of the Precision Time Protocol in Industrial Automation Networks", IEEE TRANSACTIONS ON INSTRUMENTATION AND MEASUREMENT, IEEE SERVICE CENTER, PISCATAWAY, NJ, US, Bd. 58, Nr. 6, 1. Juni 2009 (2009-06-01), Seiten 1849-1857, XP011255351, ISSN: 0018-9456 in der Anmeldung erwähnt**
• **ANDREA BONDAVALLI ET AL: "Master Failure Detection Protocol in Internal Synchronization Environment", IEEE TRANSACTIONS ON INSTRUMENTATION AND MEASUREMENT, IEEE SERVICE CENTER, PISCATAWAY, NJ, US, Bd. 62, Nr. 1, 1. Januar 2013 (2013-01-01) , Seiten 4-12, XP011475475, ISSN: 0018-9456, DOI: 10.1109/TIM.2012.2209916**
• **ANDREA BONDAVALLI ET AL: "Assuring Resilient Time Synchronization", RELIABLE DISTRIBUTED SYSTEMS, 2008. SRDS '08. IEEE SYMPOSIUM ON, IEEE, PISCATAWAY, NJ, USA, 6. Oktober 2008 (2008-10-06), Seiten 3-12, XP031366845, ISBN: 978-0-7695-3410-7**

**Beschreibung**

In einer Vielzahl von technischen Gebieten werden Kommunikationsnetze dazu verwendet, dezentral Arbeitsabläufe zu steuern. Insbesondere in industriellen Automatisierungsanlagen ist von besonderer Bedeutung, dass die automatischen Arbeitsvorgänge genau aufeinander abgestimmt sind. Dies wird dadurch erreicht, dass die einzelnen, miteinander kommunizierenden Netzknoten in dem Kommunikationsnetz jeweils interne Uhren aufweisen und zur Synchronisation aller internen Uhren Synchronisationsnachrichten übertragen werden. Die interne Uhr eines jeweiligen Netzknotens arbeitet hierbei mit einer entsprechenden Knotentaktfrequenz, die für die einzelnen Netzknoten gegebenenfalls unterschiedlich sein kann. Die Synchronisation der Uhren erfolgt auf der Basis einer vorgegebenen Referenzuhr (engl. Bezeichung: "Grandmaster Clock") bzw. deren Referenztaktfrequenz, wobei die Synchronisationsnachrichten in Abhängigkeit von der Referenztaktfrequenz übertragen werden. Dies bedeutet, dass in festen Taktabständen gemäß der Referenztaktfrequenz Synchronisationsnachrichten übermittelt werden. Die einzelnen, im Kommunikationsnetz übertragenen Synchronisationsnachrichten enthalten den Taktzählzustand der Referenzuhr. Jeder Netzknoten aktualisiert diesen Taktzählzustand für den eigenen Bedarf, indem er die Anzahl an Takten der Referenzuhr zwischen Aussenden der Synchronisationsnachricht beim vorhergehenden Netzknoten und Empfangen der Synchronisationsnachricht beim jeweiligen Netzknoten abschätzt (engl. Bezeichnung "line delay"). Außerdem aktualisiert jeder Netzknoten diesen Taktzählzustand für den nächsten Knoten, indem er auch die Anzahl an Takten der Referenzuhr zwischen seinem Empfangen der Synchronisationsnachricht und seinem Aussenden der Synchronisationsnachricht abschätzt (engl. Bezeichnung "bridge delay"). Diese Abschätzung erfolgt u. a. üblicherweise dadurch, dass das Taktverhältnis (im Englischen auch als "Rate Compensation Factor" RCF bezeichnet) zwischen der Referenztaktfrequenz und der Knotentaktfrequenz des jeweiligen Netzknotens abgeschätzt wird. Mit dem abgeschätzten Taktverhältnis kann dann für jede gewünschte Zeitspanne eine Umrechnung der Anzahl an Takten der Knotentaktfrequenz in die entsprechende Anzahl der Referenztaktfrequenz durchgeführt werden. Zum Beispiel kann damit eine Umrechnung der Zeitspanne zwischen Aussenden einer Synchronisationsnachricht beim vorhergehenden Netzknoten und Aussenden der Synchronisationsnachricht beim jeweiligen Netzknoten, gemessen in Takten der Knotentaktfrequenz, in die Takte der Referenztaktfrequenz durchgeführt werden. Die sich daraus ergebende Anzahl an Takten wird dann zu den Takten der empfangenen Synchronisationsnachricht hinzuaddiert und eine entsprechend aktualisierte Synchronisationsnachricht wird von dem entsprechenden Netzknoten wieder ausgesendet.

Aus dem Stand der Technik ist im Bereich der industriellen Automatisierungstechnik der Standard IEC 61158 Type 10 bekannt, genannt PROFINET, bei dem es sich um ein Ethernet handelt, welches industriellen Vorgaben genügt. Dieser PROFINET Standard arbeitet nach dem oben dargelegten Prinzip, wonach in den Netzknoten die Taktzählzustände in den Synchronisationsnachrichten aktualisiert werden. Auf PROFINET basierte Systeme verwenden zur Synchronisation der internen Uhren der Netzknoten üblicherweise das Precision Transparent Clock Protocol (PTCP) gemäß IEC 61158 Type 10 PTCP, welches auch im Standard IEEE 1588 V2 als Profil referenziert wird.

Dieses aktualisiert nach dem oben dargelegten Prinzip die Taktzählzustände der Synchronisationsnachrichten. Gemäß diesem Standard werden aufeinanderfolgend Synchronisationsnachrichten von einem Netzknoten zum nächsten in einer logischen Reihe oder Baumstruktur übertragen. Die Synchronisationsnachrichten stammen von einem Referenzknoten bzw. Masterelement, welches das erste Element in der Reihe bzw. in der Baumstruktur ist. Die Synchronisationsnachrichten enthalten ursprünglich einen Zeitstempel des Zählers einer Referenzuhr in dem Referenzknoten, wenn eine Synchronisationsnachricht übertragen wurde. Die Netzknoten in der Reihe bzw. Baumstruktur, auch genannt Slaves, verarbeiten diese Information und senden sie weiter. Ein Netzknoten fügt hierbei alle abgeschätzten Zeitverzögerungen zwischen dem Aussenden einer Synchronisationsnachricht vom vorhergehenden Netzknoten und seinem eigenen Aussenden der Synchronisationsnachricht als Inhalt der Synchronisationsnachricht hinzu.

Eine konkrete Implementierung ist beschrieben in R. Lupas Scheiterer, C. Na, D. Obradovic und G. Steindl: "Synchronization Performance of the Precision Time Protocol in Industrial Automation Networks", ISPCS07 Special Issue of the IEEE Transactions on Instrumentation and Measurement, June 2009, Volume 58, Issue 6, pp. 1849-1857.

Aus dem Stand der Technik ist folgendes Dokument bekannt: Andrea Bondavalli et al. "Master Failure Detection Protocol in Internation Synchronization Evrironment", IEEE Transactions on Instrumentation and Meansurements, Vol. 62, No. 1, January 2013. In dem Dokument wird ein konventionelles Verfahren zum Erkennen von Timingfehlern offenbart.

Aus der EP 2034642 A1 ist Verfahren bekannt, bei dem die in dem Kommunikationsnetz übermittelten Synchronisationsnachrichten den Taktzählzustand (bzw. nach dem ersten Slave den abgeschätzten Taktzählzustand) der Referenzuhr beinhalten, die in einer Referenztaktfrequenz arbeitet. Der Taktzählzustand wird von jedem Netzknoten abgeschätzt und in der Synchronisationsnachricht aktualisiert. Bei der Abschätzung des Taktzählzustandes werden Veränderungen in der Referenztaktfrequenz berücksichtigt. Eine genaue Bestimmung des Taktzählzustands wird mit Hilfe einer Approximation der zeitlichen Veränderung des Taktverhältnisses zwischen Referenztaktfrequenz und Knotentaktfrequenz durch eine Funktion erreicht, wodurch das Taktverhältnis beim Aussenden einer neuen Synchronisationsnachricht vorhergesagt werden kann und auf der Basis des vorhergesagten Taktverhältnisses ein präziser aktueller Taktzählzustand ermittelbar ist.

Aus der EP 2299614 A2 ist ein Verfahren zur Zeitsynchronisation in einem Kommunikationsnetz bekannt, mit dem die Schätzung des Taktzählzustands der Referenzuhr weiter verbessert wird. Bei diesem Verfahren wird für zumindest einen Netzknoten mit Hilfe eines Reglers ein geregelter Taktzählzustand ermittelt, welcher eine Schätzung des Referenzuhr-Taktzählzustands darstellt und einen stetigen Verlauf aufweist. Durch dieses Verfahren wird der zuvor ermittelte geschätzte Referenzuhr-Taktzählzustand in jedem Netzknoten mit Hilfe eines Reglers nachbearbeitet. Dies hat den Vorteil, dass der Regler ein Rauschen über dem geschätzten Referenzuhr-Taktzählzustand verringert und mit dem geregelten Taktzählzustand eine kontinuierliche synchronisierte Zeit (mit stetigem Verlauf) für jeden Netzknoten bereitstellt, wie es für typische industrielle Anforderungen erforderlich ist. Durch den Einsatz des Reglers kann daher bei vorgegebener Genauigkeit für die Zeitsynchronisation eine größere Anzahl von Netzknoten einbezogen werden.

Es wird somit für den eigenen Bedarf jedes Netzknotens (nicht aber für das Weiterleiten zum nächsten Netzknoten) nicht mehr der geschätzte Referenzuhr-Taktzählzustand als Schätzung des Referenzuhr-Taktzählzustands verwendet, sondern vielmehr der geregelte Taktzählzustand, welcher durch eine Verfolgung des geschätzten Referenzuhr-Taktzählzustands mit dem Regler ermittelt wird. Somit werden die Sprünge des geschätzten Referenzuhr-Taktzählzustands bei Neuberechnung nach Erhalt einer Synchronisationsnachricht, welche in vielen industriellen Anwendungen nicht tolerierbar sind, in den stetigen Verlauf des geregelten Taktzählzustands umgewandelt. Störungen von zeitabhängigen Prozessen werden somit reduziert. Darüber hinaus weist der geregelte Taktzählzustand im Mittel eine geringere Abweichung vom Referenzuhr-Taktzählzustand auf als der geschätzte Referenzuhr-Taktzählzustand.

Durch die vorliegende Erfindung soll die Gefahr von Störungen zeitabhängiger Prozesse durch mangelnde Synchronisation der Netzknoten weiter verringert werden.

Diese Aufgabe wird durch ein Verfahren zur Lokalisierung einer Frequenzabweichung in einem Kommunikationsnetz gelöst,

- bei dem das Kommunikationsnetz eine Vielzahl von miteinander kommunizierenden Netzknoten umfasst, welche jeweils eine interne Uhr beinhalten, welche mit einer dem jeweiligen Netzknoten zugeordneten Knotentaktfrequenz getaktet ist,
- bei dem Synchronisationsnachrichten in dem Kommunikationsnetz übertragen werden, welche zur Zeitsynchronisation der internen Uhren der Netzknoten dienen,
- bei dem die Synchronisationsnachrichten aufeinander folgend von einem vorhergehenden Netzknoten zu einem mittleren Netzknoten und von diesem zu einem nächsten Netzknoten in Abhängigkeit von einer durch eine Referenzuhr vorgegebenen Referenztaktfrequenz übermittelt werden, wobei die Synchronisationsnachrichten den Referenzuhr-Taktzählzustands der Referenzuhr beinhalten;
- der vorhergehende Netzknoten, der mittlere Netzknoten und der nächste Netzknoten in vorgegebenen zeitlichen Abständen jeweils eine Synchronisationsabweichung berechnen;
- der mittlere Netzknoten folgenden Algorithmus ausführt, sofern seine zuletzt ermittelte Synchronisationsabweichung einen Schwellwert überschreitet:

    - Detektion einer Veränderung der Referenztaktfrequenz, sofern die Synchronisationsabweichungen, welche der vorhergehende Netzknoten, der mittlere Netzknoten und der nächste Netzknoten berechnet haben, zueinander ähnlich sind, und andernfalls
    - Detektion einer Veränderung der Knotentaktfrequenz des mittleren Netzknotens, sofern die Synchronisationsabweichungen, welche der vorhergehende Netzknoten und der nächste Netzknoten berechnet haben, zueinander ähnlich sind.

Die Aufgabe wird ferner durch ein Kommunikationsnetz zur Lokalisierung einer Frequenzabweichung gelöst,

- umfassend eine Vielzahl von miteinander kommunizierenden Netzknoten, welche jeweils eine interne Uhr beinhalten, welche mit einer dem jeweiligen Netzknoten zugeordneten Knotentaktfrequenz getaktet ist,
- eingerichtet zur Übertragung von Synchronisationsnachrichten, welche zur Zeitsynchronisation der internen Uhren der Netzknoten dienen,
- eingerichtet zur Übermittlung der Synchronisationsnachrichten aufeinander folgend von einem vorhergehenden Netzknoten zu einem mittleren Netzknoten und von diesem zu einem nächsten Netzknoten in Abhängigkeit von einer durch eine Referenzuhr vorgegebenen Referenztaktfrequenz, wobei die Synchronisationsnachrichten den Referenzuhr-Taktzählzustands der Referenzuhr beinhalten,
- wobei der vorhergehende Netzknoten, der mittlere Netzknoten und der nächste Netzknoten eingerichtet sind, in vorgegebenen zeitlichen Abständen jeweils eine Synchronisationsabweichung zu berechnen;
- wobei der mittlere Netzknoten zur Ausführung des folgenden Algorithmus eingerichtet ist, sofern seine zuletzt ermittelte Synchronisationsabweichung einen Schwellwert überschreitet:

- Detektion einer Veränderung der Referenztaktfrequenz, sofern die Synchronisationsabweichungen, welche der vorhergehende Netzknoten, der mittlere Netzknoten und der nächste Netzknoten berechnet haben, zueinander ähnlich sind, und andernfalls
- Detektion einer Veränderung der Knotentaktfrequenz des mittleren Netzknotens, sofern die Synchronisationsabweichungen, welche der vorhergehende Netzknoten und der nächste Netzknoten berechnet haben, zueinander ähnlich sind.

Neben dem soeben beschriebenen Verfahren und der Vorrichtung umfasst die Erfindung ferner einen computerlesbaren Datenträger, auf dem ein Computerprogramm gespeichert ist, welches das soeben beschriebene Verfahren ausführt, wenn es in einem Mikroprozessor abgearbeitet wird.

Weiterhin umfasst die Erfindung ein Computerprogramm, das in einem Mikroprozessor abgearbeitet wird und dabei das zuvor beschriebene Verfahren ausführt.

Die im Folgenden genannten Vorteile müssen nicht notwendigerweise durch die Gegenstände der unabhängigen Patentansprüche erzielt werden. Vielmehr kann es sich hierbei auch um Vorteile handeln, welche lediglich durch einzelne Ausführungsformen, Varianten oder Weiterbildungen erzielt werden

Das Verfahren und das Kommunikationsnetz erlauben es, eine starke Frequenzabweichung im Kommunikationsnetz durch die Untersuchung der Synchronisationsabweichungen in benachbarten Netzknoten unmittelbar zu erkennen und zu lokalisieren. Neben einer Frequenzabweichung der Referenzuhr kann auch eine Frequenzabweichung in der internen Uhr jedes anderen Netzknotens ermittelt werden, sofern das Verfahren von allen Netzknoten ausgeführt wird.

Eine Frequenzabweichung kann beispielsweise auf äußere Einflüsse zurückzuführen sein. Eine zeitnahe Detektion hat folgende Vorteile:

1. Eine Frequenzabweichung einer internen Uhr eines Netzknotens beeinträchtigt vorübergehend die Qualität seiner Schätzung des Referenzuhr-Taktzählzustands, bis der Netzknoten sein Taktverhältnis und seinen internen Regler vollständig an die Abweichung angepasst hat. Aus der Detektion der Frequenzabweichung ergibt sich folglich ein Maß für die Güte der Zeitschätzung in diesem Netzknoten.

2. Eine Frequenzabweichung der Referenzuhr hat wesentlich gravierendere Effekte. Da sämtliche Netzknoten bemüht sind, der Referenzuhr zu folgen, bleiben sie in ihrer Adaption hinter der Referenzuhr zurück, sodass die Qualität der Synchronisierung im gesamten Kommunikationsnetz abnimmt. Erschwerend kommt hinzu, dass sich die Adaption in Abhängigkeit von der Entfernung zur Referenzuhr zunehmend verzögert. Dies verschlechtert nicht nur die Synchronisierung der Netzknoten mit der Referenzuhr, sondern auch die Synchronisierung der Netzknoten untereinander. Der schnellen Detektion einer Frequenzabweichung der Referenzuhr kommt somit große Bedeutung zu.

3. Die äußere Störung, welche die Frequenzabweichung verursacht, kann auf einen Systemfehler oder einen Einbruch in das Kommunikationsnetz zurückzuführen sein. Die genaue Lokalisierung des betroffenen Netzknotens unterstützt die zeitnahe Ermittlung und Bekämpfung des Systemfehlers oder Einbruchs.

Gemäß einer Ausführungsform ergibt sich ein Verfahren,

- bei dem als Synchronisationsabweichung eines Netzknotens eine Änderung eines Taktverhältnis zwischen der Referenztaktfrequenz und seiner Knotentaktfrequenz basierend auf in der Vergangenheit empfangenen Synchronisationsnachrichten berechnet wird.

In einer Weiterbildung ergibt sich ein Verfahren,

- bei dem jeder Netzknoten zur Ermittlung eines geschätzten Referenzuhr-Taktzählzustands eingerichtet ist, welcher eine Schätzung des Referenzuhr-Taktzählzustands der Referenzuhr darstellt,
- bei dem als Synchronisationsabweichung eines Netzknotens eine Abweichung seines geschätzten Referenzuhr-Taktzählzustands gegenüber dem Referenzuhr-Taktzählzustands in einer empfangenen Synchronisationsnachricht berechnet wird.

Vorteilhafterweise wird hier ein Fehler zwischen den benachbarten Netzwerkknoten ausgetauscht, welcher sich aus der Differenz des geschätzten Referenzuhr-Taktzählzustands und des Referenzuhr-Taktzählzustands aus der zuletzt empfangenen Synchronisationsnachricht ergibt.

Gemäß einer Ausführungsform ergibt sich ein Verfahren,

- bei dem das Ergebnis der Detektion an eine zentrale Auswertungseinheit übertragen wird.

Dies ermöglicht eine schnelle zentrale Detektion von Frequenzabweichungen, auf die sofort reagiert werden kann.

In einer Weiterbildung ergibt sich ein Verfahren,

- bei dem die Zeitsynchronisation nach dem Standard IEC 61158 Type 10, genannt PROFINET, und/oder dem Precision Transparent Clock Protocol gemäß dem Standard IEC 61158 Type 10 PTCP erfolgt, wobei der Referenzknoten als Master und die Netzknoten als Slaves gemäß den jeweiligen Standards verwendet werden, und wobei das Kommunikationsnetz ein Multicast-Netzwerk, insbesondere ein Ethernet, ist.

Das Verfahren und das Kommunikationsnetz erlauben die einfache Adaption der bereits bisher eingesetzten Protokolle, um Synchronisationsabweichungen von benachbarten Netzwerkknoten auszuwerten.

Gemäß einer Ausführungsform ergibt sich ein Kommunikationsnetz,

- bei dem der mittlere Netzknoten eine Netzwerkkarte, insbesondere eine Netzwerkkarte mit eigener Echtzeit-Uhr und Zeitstempel-Einheit, enthält oder aus ihr besteht.

Das erfindungsgemäße Verfahren wird vorzugsweise in einer industriellen Automatisierungsanlage eingesetzt, bei der verteilte Komponenten der Anlage miteinander kommunizieren, um Fertigungsabläufe, z.B. bei der Automobilherstellung, zu steuern. Hierzu kommunizieren die einzelnen Komponenten über ein Kommunikationsnetz drahtlos und/oder drahtgebunden miteinander. Die Komponenten stellen somit Netzknoten des Kommunikationsnetzes dar.

Ausführungsbeispiele der Erfindung werden nachfolgend anhand der beigefügten Figuren detailliert beschrieben. In den Figuren sind gleiche oder funktionsgleiche Elemente mit denselben Bezugszeichen versehen, sofern nichts anderes angegeben ist.

Es zeigen:

Fig. 1 eine schematische Darstellung einer Mehrzahl von Netzknoten in einem Kommunikationsnetz, zwischen denen Synchronisationsnachrichten übermittelt werden (Stand der Technik);

Fig. 2 eine schematische Darstellung einer Mehrzahl von Netzknoten in einem Kommunikationsnetz, welche eine Frequenzabweichung lokalisieren.

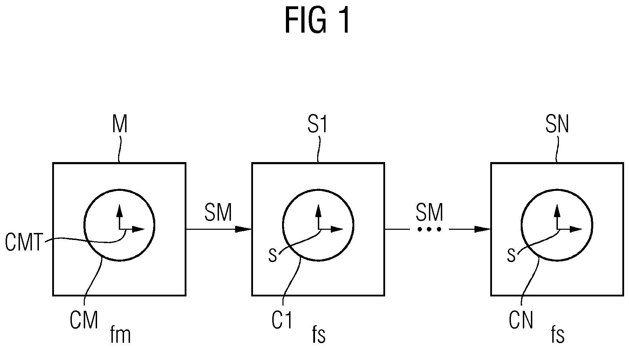

In Fig. 1 sind Netzknoten S1 bis SN (gebräuchlicher Fachbegriff: Slaves) gezeigt, wobei jeder Netzknoten S1 bis SN über eine entsprechende interne Uhr C1, ..., CN verfügt. Jede dieser Uhren arbeitet in einer individuellen Knotentaktfrequenz fs (Slave-Taktfrequenz), welche für unterschiedliche Netzknoten S1 bis SN gegebenenfalls unterschiedlich sein kann. Darüber hinaus ist in dem Kommunikationsnetz der Fig. 1 ein Referenzknoten M (gebräuchlicher Fachbegriff: Master) vorgesehen, welcher über eine Referenzuhr CM verfügt, welche mit einer Referenztaktfrequenz fm getaktet ist, auf die alle internen Uhren C1, ..., CN der Netzknoten S1 bis SN abgestimmt werden sollen. Um dies zu erreichen, werden Synchronisationsnachrichten SM in konstanten, eine vorgegebene Anzahl von Takten der Referenzuhr CM umfassenden Intervallen vom Referenzknoten M ausgesendet. Jede dieser Synchronisationsnachrichten SM enthält hierbei einen Refernzuhr-Taktzählzustand CMT der Referenzuhr CM, d.h. die im Betrieb des Verfahrens bereits abgelaufenen Takte der Referenzuhr CM. Dieser Referenzuhr-Taktzählzustand CMT wird dabei mit jeder Synchronisationsnachricht SM übermittelt.

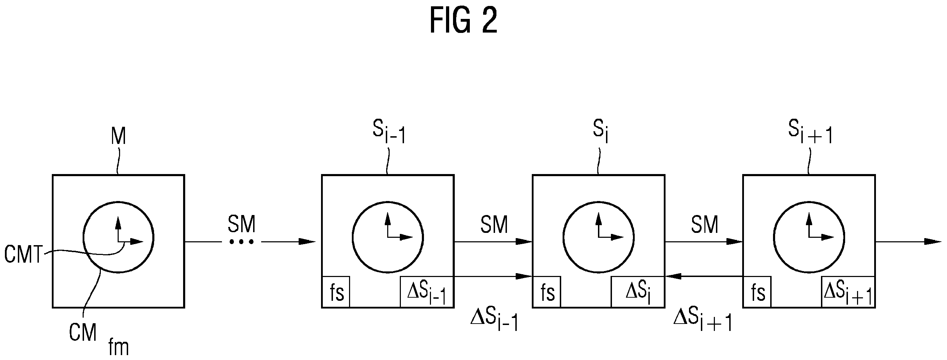

Der Referenzknoten M und die einzelnen Netzknoten S1 bis SN kommunizieren in einer Reihe miteinander, wobei Synchronisationsnachrichten vom Referenzknoten M an den Netzknoten S1 und von diesem an den Netzknoten S2 usw. bis zum Netzknoten SN übermittelt werden. Um eine exakte Zeitsynchronisation in den einzelnen Netzknoten S1 bis SN zu erreichen, muss der Referenzuhr-Taktzählzustand CMT in den Synchronisationsnachrichten SM in den einzelnen Netzknoten S1 bis SN aktualisiert werden. Deshalb ist in jedem Netzknoten S1 bis SN eine Zeitverzögerung bekannt, die zwischen dem Aussenden einer Synchronisationsnachricht SM vom vorhergehenden Netzknoten S1 bis SN (bzw. vom Referenzknoten M) bis zum Aussenden der Synchronisationsnachricht SM vom jeweiligen Netzknoten S1 bis SN zum nächsten Netzknoten S1 bis SN benötigt wird. Diese Zeitverzögerung setzt sich aus zwei Zeitspannen $LD_i$ und $BD_i$ ($i = 1, ..., N$, zu dieser Art der Nummerierung der Netzknoten vgl. auch Fig. 2) zusammen, wobei diese Zeitspannen für jeden Netzknoten S1 bis SN unterschiedlich sein kann. $LD_i$ ist hierbei die Zeitspanne, welche zur Übermittlung der Nachricht vom vorhergehenden Netzknoten $S_{i-1}$ zum jeweiligen Netzknoten $S_i$ benötigt wird (LD = Line Delay). $BD_i$ ist eine Verarbeitungszeit, welche im Netzknoten $S_i$ zum Verarbeiten einer empfangenen Synchronisationsnachricht SM bis zum Aussenden der Synchronisationsnachricht SM zum nächsten Netzknoten benötigt wird (BD = Bridge Delay). Diese Verzögerungszeit wird in dem jeweiligen Netzknoten S1 bis SN in Takten gemäß der Knotentaktfrequenz fs angegeben.

Um nunmehr den Referenzuhr-Taktzählzustand CMT einer empfangenen Synchronisationsnachricht SM zu aktualisieren, ist in dem jeweiligen Netzknoten das Taktverhältnis zwischen der Referenztaktfrequenz fm und der jeweiligen Knotentaktfrequenz fs abzuschätzen. Dieses Taktverhältnis wird nachfolgend auch als RCF (Abkürzung für engl. "Rate Compensation Factor") bezeichnet und ist beispielsweise der Quotient aus fm und fs. Durch Multiplikation des abgeschätzten Taktverhältnisses RCF mit der Zeitverzögerung erhält man die Anzahl von Zähltakten beim Wiederaussenden der zuvor empfangenen Synchronisationsnachricht SM. Diese Anzahl wird zu dem Referenzuhr-Taktzählzustand CMT der empfangenen Synchronisationsnachricht SM hinzuaddiert, und eine Synchronisationsnachricht SM mit diesem aktuellen Referenzuhr-Taktzählzustand CMT wird von dem jeweiligen Netzknoten ausgesendet. Der Ablauf der Synchronisation der internen Uhren C1 bis CN ist hierbei dem Fachmann hinlänglich bekannt und wird deshalb nicht im Detail erläutert.

Das Taktverhältnis RCF wird lokal in jedem Netzknoten S1 bis SN berechnet. Ein vorläufiges Taktverhältnis $RCF_{pre}$ berechnet sich aus

$$RCF_{pre}(k) = \frac{CMT(k) - CMT(k - 1)}{s(k) - s(k - 1)}$$

wobei $CMT(k)$ der durch den jeweiligen Netzknoten S1 bis SN geschätzte Referenzuhr-Taktzählzustand CMT zum Zeitpunkt k, und s der Taktzählzustand der internen Uhr des Netzknotens zum Zeitpunkt k ist.

Aus dem vorläufigen Taktverhältnis $RCF_{pre}$ kann ein endgültiges Taktverhältnis RCF durch Glättung berechnet werden.

Aus der obigen Formel ergibt sich, dass sich das Taktverhältnis RCF (bzw. das vorläufige Taktverhältnis $RCF_{pre}$) mit jeder Frequenzabweichung der Referenztaktfrequenz fm oder der Knotentaktfrequenz fs des jeweiligen Netzknotens S1 bis SN ändern muss.

Gemäß dem in Figur 2 gezeigten Ausführungsbeispiel wird bei einer signifikanten Synchronisationsabweichung $\Delta S_i$ in einem mittleren Netzknoten $S_i$, welche beispielsweise als Änderung des Taktverhältnisses RCF im mittleren Netzknoten $S_i$ berechnet wird, die jüngste Änderung des Taktverhältnisse RCF mit benachbarten Netzknoten $S_{i-1}$ und $S_{i+1}$ als Synchronisationsabweichung ausgetauscht. Dies bedeutet beispielsweise, dass die benachbarten Knoten $S_{i-1}$ und $S_{i+1}$ als Synchronisationsabweichung $\Delta S_{i-1}, \Delta S_{i+1}$ eine zuletzt berechnete Änderung ihres eigenen Taktverhältnisses RCF an den mittleren Netzknoten $S_i$ übermitteln. Die Synchronisationsabweichungen $\Delta S_{i-1}, \Delta S_i, \Delta S_{i+1}$ werden wird hierbei nicht zwangsläufig genutzt, um die Netzknoten $S_{i-1}, S_i$ und $S_{i+1}$ besser zu synchronisieren, sondern um zu ermitteln, ob die Synchronisationsabweichung $\Delta S_i$ im mittleren Netzknoten $S_i$ auf eine Frequenzabweichung der Referenztaktfrequenz fm im Referenzknoten M oder der Knotentaktfrequenz fs im Netzknoten $S_i$ zurückzuführen ist. Wenn sich das Taktverhältnis RCF in den Netzknoten $S_{i-1}, S_i$ und $S_{i+1}$ um den gleichen Betrag verändert hat, wenn also die Synchronisationsabweichungen $\Delta S_{i-1}, \Delta S_i, \Delta S_{i+1}$ gleich oder ähnlich zueinander sind, so kann dies verursacht sein durch

   a) eine identische Änderung der Knotentaktfrequenz fs in den Netzknoten $S_{i-1}, S_i$ und $S_{i+1}$, oder
   b) eine Änderung der Referenztaktfrequenz fm.

Während die Wahrscheinlichkeit, identische Änderungen des Taktverhältnisses RCF bzw. identische Synchronisationsabweichungen $\Delta S_{i-1}, \Delta S_i, \Delta S_{i+1}$ in den Netzknoten $S_{i-1}, S_i$ und $S_{i+1}$ zu beobachten in beiden Fällen bei 1 liegt, ist die die A-priori-Wahrscheinlichkeit einer Frequenzänderung ausschließlich in der Referenzuhr CM deutlich höher als eine identische Frequenzänderung in den Netzknoten $S_{i-1}, S_i$ und $S_{i+1}$. Unter Rückgriff auf den Satz von Bayes lässt sich somit entscheiden, dass die signifikante Änderung des Taktverhältnisses RCF im Netzknoten $S_i$ mit größter Wahrscheinlichkeit durch eine Änderung der Referenztaktfrequenz fm verursacht ist.

Wenn hingegen der Netzknoten $S_i$ eine signifikante Synchronisationsabweichung bzw. eine signifikante Änderung seines Taktverhältnisses RCF gegenüber seinen benachbarten Netzknoten $S_{i-1}$ und $S_{i+1}$ feststellt, während die Synchronisationsabweichung $\Delta S_{i-1}$ des benachbarten Netzknoten $S_{i-1}$ der Synchronisationsabweichung $\Delta S_{i+1}$ des benachbarten Netzknoten $S_{i+1}$ ähnelt, so ist eine Änderung der Knotentaktfrequenz fs im Netzknoten i die wahrscheinlichste Ursache.

Der gemäß dem vorliegenden Ausführungsbeispiel aus diesen Beobachtungen abgeleitete Diagnose-Algorithmus wird in geeigneten Zeitintervallen ausgeführt und arbeitet wie folgt:

WENN $\Delta S_i > Schwellwert$

DANN WENN $\Delta S_i, \Delta S_{i-1}, \Delta S_{i+1}$ zueinander ähnlich,

DANN Erkennung einer Änderung der Referenztaktfrequenz fm,

ANDERNFALLS

WENN $\Delta S_{i-1}, \Delta S_{i+1}$ zueinander ähnlich,

DANN Erkennung einer Änderung der Knotentaktfrequenz fs im Netzknoten i

ANDERNFALLS

Keine Detektion möglich.

Die quantitative Bestimmung des Schwellwert bzw. der Ähnlichkeiten, d.h. der Parameter der Algorithmus, erfolgt entsprechend den jeweiligen Anforderungen und Systemeigenschaften.

Sofern eine Frequenzänderung detektiert wird, wird diese gemäß einer Variante des Ausführungsbeispiels an eine zentrale Auswertungseinheit kommuniziert, welche die diesbezüglichen Signale aller Netzknoten zusammenführt und evaluiert.

Anstelle der Abweichungen des Taktverhältnisses RCF kann der Algorithmus als Synchronisationsabweichungen $\Delta S_{i-1}$, $\Delta S_i$, $\Delta S_{i+1}$ auch eine Abweichung eines durch den jeweiligen Netzknoten $S_{i-1}$, $S_i$ und $S_{i+1}$ geschätzten Referenzuhr-Taktzählzustands RMT gegenüber dem Referenzuhr-Taktzählzustand CMT in einer empfangenen Synchronisationsnachricht SM auswerten.

Der Algorithmus wird beispielsweise in einem Mikroprozessor ausgeführt, welcher beispielsweise auf einer Netzwerkkarte, z. B. einer Netzwerkkarte mit eigener Echtzeit-Uhr und Zeitstempel-Einheit, angeordnet sein kann. Der Algorithmus kann auch durch eine spezielle Hardware oder Schaltung implementiert werden. Eine Ausführung der Echtzeit-Uhr und der Zeitstempel-Einheit in Hardware ist wegen der hohen Anforderungen an zeitliche Genauigkeit von Vorteil. Alternativ zu der Echtzeit-Uhr auf der Netzwerkkarte kann auch auf eine System-Uhr des Netzknotens zugegriffen werden.

In einer Weiterbildung der beschriebenen Ausführungsbeispiele erfolgt die Zeitsynchronisation nach dem Standard IEC 61158 Type 10, genannt PROFINET, und alternativ oder ergänzend nach dem Precision Transparent Clock Protocol (PTCP) gemäß IEC 61158 Type 10 PTCP, welches auch im Standard IEEE 1588 V2 als Profil referenziert wird. Hierbei dient der Referenzknoten M als Master, während die Netzknoten S1-SN als Slaves gemäß den jeweiligen Standards verwendet werden. Als Kommunikationsnetz eignet sich hier ein Multicast-Netzwerk, beispielsweise ein Ethernet.

Obwohl die Erfindung im Detail durch die Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Die beschriebenen Ausführungsbeispiele, Varianten, Ausführungsformen und Weiterbildungen sind frei miteinander kombinierbar.

**Patentansprüche**

1. Verfahren zur Lokalisierung einer Frequenzabweichung in einem Kommunikationsnetz,

   - bei dem das Kommunikationsnetz eine Vielzahl von miteinander kommunizierenden Netzknoten (S1, ..., SN) umfasst, welche jeweils eine interne Uhr (C1, ..., CN) beinhalten, welche mit einer dem jeweiligen Netzknoten (S1, ..., SN) zugeordneten Knotentaktfrequenz (fs) getaktet ist,
   - bei dem Synchronisationsnachrichten (SM) in dem Kommunikationsnetz übertragen werden, welche zur Zeitsynchronisation der internen Uhren (C1, ..., CN) der Netzknoten (S1, ..., SN) dienen,
   - bei dem die Synchronisationsnachrichten (SM) aufeinander folgend von einem vorhergehenden Netzknoten ($S_{i-1}$) zu einem mittleren Netzknoten ($S_i$) und von diesem zu einem nächsten Netzknoten ($S_{i+1}$) in Abhängigkeit von einer durch eine Referenzuhr (CM) vorgegebenen Referenztaktfrequenz (fm) übermittelt werden, wobei die Synchronisationsnachrichten (SM) den Referenzuhr-Taktzählzustands (CMT) der Referenzuhr (CM) beinhalten;

- der vorhergehende Netzknoten ($S_{i-1}$), der mittlere Netzknoten ($S_i$) und der nächste Netzknoten ($S_{i+1}$) in vorgegebenen zeitlichen Abständen jeweils eine Synchronisationsabweichung ($\Delta S_{i-1}$, $\Delta S_i$, $\Delta S_{i+1}$ berechnen;
- der mittlere Netzknoten ($S_i$) folgenden Algorithmus ausführt, sofern seine zuletzt ermittelte Synchronisationsabweichung ($\Delta S_i$) einen Schwellwert überschreitet:

- Detektion einer Veränderung der Referenztaktfrequenz (fm), sofern die Synchronisationsabweichungen ($\Delta S_{i-1}$, $\Delta S_i$, $\Delta S_{i+1}$), welche der vorhergehende Netzknoten ($S_{i-1}$), der mittlere Netzknoten ($S_i$) und der nächste Netzknoten ($S_{i+1}$) berechnet haben, zueinander ähnlich sind, und andernfalls
- Detektion einer Veränderung der Knotentaktfrequenz (fs) des mittleren Netzknotens ($S_i$), sofern die Synchronisationsabweichungen ($\Delta S_{i-1}$, $\Delta S_{i+1}$), welche der vorhergehende Netzknoten ($S_{i-1}$) und der nächste Netzknoten ($S_{i+1}$) berechnet haben, zueinander ähnlich sind.

2. Verfahren nach Anspruch 1,

- bei dem als Synchronisationsabweichung ($\Delta S_1$, ..., $\Delta S_N$) eines Netzknotens (S1, ..., SN) eine Änderung eines Taktverhältnisses (RCF) zwischen der Referenztaktfrequenz (fm) und seiner Knotentaktfrequenz (fs) basierend auf in der Vergangenheit empfangenen Synchronisationsnachrichten (SM) berechnet wird.

3. Verfahren nach Anspruch 1,

- bei dem jeder Netzknoten (S1, ..., SN) zur Ermittlung eines geschätzten Referenzuhr-Taktzählzustands (RMT) eingerichtet ist, welcher eine Schätzung des Referenzuhr-Taktzählzustands (CMT) der Referenzuhr (CM) darstellt,
- bei dem als Synchronisationsabweichung ($\Delta S_1$, ..., $\Delta S_N$) eines Netzknotens (S1, ..., SN) eine Abweichung seines geschätzten Referenzuhr-Taktzählzustands (RMT) gegenüber dem Referenzuhr-Taktzählzustands (CMT) in einer empfangenen Synchronisationsnachricht (SM) berechnet wird.

4. Verfahren nach einem der vorangegangenen Ansprüche,

- bei dem das Ergebnis der Detektion an eine zentrale Auswertungseinheit übertragen wird.

5. Verfahren nach einem der vorangegangenen Ansprüche,

- bei dem die Zeitsynchronisation nach dem Standard IEC 61158 Type 10, genannt PROFINET, und/oder dem Precision Transparent Clock Protocol gemäß dem Standard IEC 61158 Type 10 PTCP erfolgt, wobei der Referenzknoten (M) als Master und die Netzknoten (S1, ..., SN) als Slaves gemäß den jeweiligen Standards verwendet werden, und wobei das Kommunikationsnetz ein Multicast-Netzwerk, insbesondere ein Ethernet, ist.

6. Kommunikationsnetz,

- umfassend eine Vielzahl von miteinander kommunizierenden Netzknoten (S1, ..., SN), welche jeweils eine interne Uhr (C1, ..., CN) beinhalten, welche mit einer dem jeweiligen Netzknoten (S1, ..., SN) zugeordneten Knotentaktfrequenz (fs) getaktet ist,
- eingerichtet zur Übertragung von Synchronisationsnachrichten (SM), welche zur Zeitsynchronisation der internen Uhren (C1, ..., CN) der Netzknoten (S1, ..., SN) dienen,
- eingerichtet zur Übermittlung der Synchronisationsnachrichten (SM) aufeinander folgend von einem vorhergehenden Netzknoten ($S_{i-1}$) zu einem mittleren Netzknoten ($S_i$) und von diesem zu einem nächsten Netzknoten ($S_{i+1}$) in Abhängigkeit von einer durch eine Referenzuhr (CM) vorgegebenen Referenztaktfrequenz (fm), wobei die Synchronisationsnachrichten (SM) den Referenzuhr-Taktzählzustands (CMT) der Referenzuhr (CM) beinhalten;
- wobei der vorhergehende Netzknoten ($S_{i-1}$), der mittlere Netzknoten ($S_i$) und der nächste Netzknoten ($S_{i+1}$) eingerichtet sind, in vorgegebenen zeitlichen Abständen jeweils eine Synchronisationsabweichung ($\Delta S_{i-1}$, $\Delta S_i$, $\Delta S_{i+1}$) zu berechnen;
- wobei der mittlere Netzknoten ($S_i$) zur Ausführung des folgenden Algorithmus eingerichtet ist, sofern seine zuletzt ermittelte Synchronisationsabweichung ($\Delta S_i$) einen Schwellwert überschreitet:

- Detektion einer Veränderung der Referenztaktfrequenz (fm), sofern die Synchronisationsabweichungen ($\Delta S_{i-1}$, $\Delta S_i$, $\Delta S_{i+1}$), welche der vorhergehende Netzknoten ($S_{i-1}$), der mittlere Netzknoten ($S_i$) und der nächste

Netzknoten ($S_{i+1}$) berechnet haben, zueinander ähnlich sind, und andernfalls
- Detektion einer Veränderung der Knotentaktfrequenz (fs) des mittleren Netzknotens ($S_i$), sofern die Synchronisationsabweichungen ($\Delta S_{i-1}$, $\Delta S_{i+1}$), welche der vorhergehende Netzknoten ($S_{i-1}$) und der nächste Netzknoten ($S_{i+1}$) berechnet haben, zueinander ähnlich sind.

**7.** Kommunikationsnetz nach Anspruch 6,

- bei dem der mittlere Netzknoten ($S_i$) eine Netzwerkkarte, insbesondere eine Netzwerkkarte mit eigener Echtzeit-Uhr und Zeitstempel-Einheit, enthält oder aus ihr besteht.

**8.** Computerlesbarer Datenträger,

- auf dem ein Computerprogramm gespeichert ist, welches das Verfahren nach einem der Ansprüche 1 bis 5 ausführt, wenn es in einem Mikroprozessor abgearbeitet wird.

**9.** Computerprogramm,

- welches in einem Mikroprozessor abgearbeitet wird und dabei das Verfahren nach einem der Ansprüche 1 bis 5 ausführt.

**Claims**

**1.** Method for locating a frequency deviation in a communication network,

- in which the communication network comprises a multiplicity of network nodes (S1, ..., SN) which communicate with one another and each comprise an internal clock (C1, ..., CN) which is clocked at a node clock frequency (fs) assigned to the respective network node (S1, ..., SN),
- in which synchronization messages (SM) which are used for the time synchronization of the internal clocks (C1, ..., CN) of the network nodes (S1, ..., SN) are transmitted in the communication network,
- in which the synchronization messages (SM) are transmitted in succession from a preceding network node ($S_{i-1}$) to a middle network node ($S_i$) and, from the latter, to a next network node ($S_{i+1}$) on the basis of a reference clock frequency (fm) predefined by a reference clock (CM), the synchronization messages (SM) comprising the reference clock count state (CMT) of the reference clock (CM);
- the preceding network node ($S_{i-1}$), the middle network node ($S_i$) and the next network node ($S_{i+1}$) each calculate a synchronization deviation ($\Delta S_{i-1}$, $\Delta S_i$, $\Delta S_{i+1}$) at predefined intervals of time;
- the middle network node ($S_i$) carries out the following algorithm if its synchronization deviation ($\Delta S_i$) determined last exceeds a threshold value:

  - detecting a change in the reference clock frequency (fm) if the synchronization deviations ($\Delta S_{i-1}$, $\Delta S_i$, $\Delta S_{i+1}$) which have been calculated by the preceding network node ($S_{i-1}$), the middle network node ($S_i$) and the next network node ($S_{i+1}$) are similar to one another, and otherwise
  - detecting a change in the node clock frequency (fs) of the middle network node ($S_i$) if the synchronization deviations ($\Delta S_{i-1}$, $\Delta S_{i+1}$) which have been calculated by the preceding network node ($S_{i-1}$) and the next network node ($S_{i+1}$) are similar to one another.

**2.** Method according to Claim 1,

- in which a change in a clock ratio (RCF) between the reference clock frequency (fm) and the node clock frequency (fs) of a network node is calculated as the synchronization deviation ($\Delta S_1$, ..., $\Delta S_N$) of a network node (S1, ..., SN) on the basis of synchronization messages (SM) received in the past.

**3.** Method according to Claim 1,

- in which each network node (S1, ..., SN) is set up to determine an estimated reference clock count state (RMT) which represents an estimation of the reference clock count state (CMT) of the reference clock (CM),
- in which a deviation of the reference clock count state (RMT) estimated by a network node from the reference clock count state (CMT) in a received synchronization message (SM) is calculated as the synchronization

deviation ($\Delta S_1$, ..., $\Delta S_N$) of a network node (S1, ..., SN).

4. Method according to one of the preceding claims,

   - in which the detection result is transmitted to a central evaluation unit.

5. Method according to one of the preceding claims,

   - in which the time synchronization is carried out according to the IEC 61158 Type 10 standard (called PROFINET) and/or the Precision Transparent Clock Protocol according to the IEC 61158 Type 10 PTCP standard, the reference node (M) being used as the master and the network nodes (S1, ..., SN) being used as slaves according to the respective standards, and the communication network being a multicast network, in particular an Ethernet.

6. Communication network

   - comprising a multiplicity of network nodes (S1, ..., SN) which communicate with one another and each comprise an internal clock (C1, ..., CN) which is clocked at a node clock frequency (fs) assigned to the respective network node (S1, ..., SN),
   - set up to transmit synchronization messages (SM) which are used for the time synchronization of the internal clocks (C1, ..., CN) of the network nodes (S1, ..., SN),
   - set up to transmit the synchronization messages (SM) in succession from a preceding network node ($S_{i-1}$) to a middle network node ($S_i$) and, from the latter, to a next network node ($S_{i+1}$) on the basis of a reference clock frequency (fm) predefined by a reference clock (CM), the synchronization messages (SM) comprising the reference clock count state (CMT) of the reference clock (CM);
   - the preceding network node ($S_{i-1}$), the middle network node ($S_i$) and the next network node ($S_{i+1}$) being set up to each calculate a synchronization deviation ($\Delta S_{i-1}$, $\Delta S_i$, $\Delta S_{i+1}$) at predefined intervals of time;
   - the middle network node ($S_i$) being set up to carry out the following algorithm if its synchronization deviation ($\Delta S_i$) determined last exceeds a threshold value:
   - detecting a change in the reference clock frequency (fm) if the synchronization deviations ($\Delta S_{i-1}$, $\Delta S_i$, $\Delta S_{i+1}$) which have been calculated by the preceding network node ($S_{i-1}$), the middle network node ($S_i$) and the next network node ($S_{i+1}$) are similar to one another, and otherwise
   - detecting a change in the node clock frequency (fs) of the middle network node ($S_i$) if the synchronization deviations ($\Delta S_{i-1}$, $\Delta S_{i+1}$) which have been calculated by the preceding network node ($S_{i-1}$) and the next network node ($S_{i+1}$) are similar to one another.

7. Communication network according to Claim 6,

   - in which the middle network node ($S_i$) contains a network card, in particular a network card with its own real-time clock and time stamp unit, or consists of said network card.

8. Computer-readable data storage medium

   - which stores a computer program which carries out the method according to one of Claims 1 to 5 when it is executed in a microprocessor.

9. Computer program

   - which is executed in a microprocessor and in the process carries out the method according to one of Claims 1 to 5.


**Revendications**

1. Procédé de localisation d'une déviation de fréquence dans un réseau de communication,

   - dans lequel le réseau de communication comprend une pluralité de nœuds de réseau communiquant entre eux (S1, ..., SN), lesquels contiennent respectivement une horloge interne (C1, ..., CN) qui est réglée avec une fréquence d'horloge de nœud (fs) associée au nœud de réseau respectif (S1, ..., SN),

- dans lequel des messages de synchronisation (SM) sont transmis dans le réseau de communication, lesquels servent à la synchronisation temporelle des horloges internes (C1, ..., CN) des nœuds de réseau (S1, ..., SN),
- dans lequel les messages de synchronisation (SM) sont transmis successivement d'un nœud de réseau précédent ($S_{i-1}$) à un nœud de réseau intermédiaire ($S_i$) et de celui-ci à un nœud de réseau suivant ($S_{i+1}$) en fonction d'une fréquence d'horloge de référence (fm) spécifiée par une horloge de référence (CM), les messages de synchronisation (SM) contenant l'état de comptage de cycles d'horloge de référence (CMT) de l'horloge de référence (CM) ;
- le nœud de réseau précédent ($S_{i-1}$), le nœud de réseau intermédiaire ($S_i$) et le nœud de réseau suivant ($S_{i+1}$) calculent respectivement, à intervalles de temps donnés, une déviation de synchronisation ($\Delta S_{i-1}$, $\Delta S_i$, $\Delta S_{i+1}$) ;
- le nœud de réseau intermédiaire ($S_i$) exécute l'algorithme suivant, dans la mesure où sa déviation de synchronisation déterminée en dernier lieu ($\Delta S_i$) dépasse une valeur seuil :

-- détection d'une modification de la fréquence d'horloge de référence (fm), dans la mesure où les déviations de synchronisation ($\Delta S_{i-1}$, $\Delta S_i$, $\Delta S_{i+1}$) qu'ont calculées le nœud de réseau précédent ($S_{i-1}$), le nœud de réseau intermédiaire ($S_i$) et le nœud de réseau suivant ($S_{i+1}$) sont similaires entre elles, sinon,
-- détection d'une modification de la fréquence d'horloge de nœud (fs) du nœud de réseau intermédiaire ($S_i$), dans la mesure où les déviations de synchronisation ($\Delta S_{i-1}$, $\Delta S_{i+1}$) qu'ont calculées le nœud de réseau précédent ($S_{i-1}$) et le nœud de réseau suivant ($S_{i+1}$) sont similaires entre elles.

2. Procédé selon la revendication 1, dans lequel est calculée, en tant que déviation de synchronisation ($\Delta S_1$, ..., $\Delta S_N$) d'un nœud de réseau (S1, ..., SN), une modification d'un rapport de cycle (RCF) entre la fréquence d'horloge de référence (fm) et sa fréquence d'horloge de nœud (fs) sur la base de messages de synchronisation (SM) reçus dans le passé.

3. Procédé selon la revendication 1,

- dans lequel chaque nœud de réseau (S1, ..., SN) est configuré pour déterminer un état de comptage de cycles d'horloge de référence estimé (RMT), lequel représente une estimation de l'état de comptage de cycles d'horloge de référence (CMT) de l'horloge de référence (CM),
- dans lequel est calculée, en tant que déviation de synchronisation ($\Delta S_1$, ..., $\Delta S_N$) d'un nœud de réseau (S1, ..., SN), une déviation de son état de comptage de cycles d'horloge de référence estimé (RMT) par rapport à l'état de comptage de cycles d'horloge de référence (CMT) dans un message de synchronisation reçu (SM).

4. Procédé selon l'une des revendications précédentes, dans lequel le résultat de la détection est transmis à une unité d'évaluation centrale.

5. Procédé selon l'une des revendications précédentes, dans lequel la synchronisation temporelle se fait selon la norme IEC 61158 Type 10, dite PROFINET, et/ou le Precision Transparent Clock Protocol selon la norme IEC 61158 Type 10 PTCP, le nœud de référence (M) étant utilisé en tant que maître et les nœuds de réseau (S1, ..., SN), en tant qu'esclaves selon les normes respectives, et le réseau de communication étant un réseau multicast, et plus particulièrement un Ethernet.

6. Réseau de communication,

- comprenant une pluralité de nœuds de réseau communiquant entre eux (S1, ..., SN), lesquels contiennent respectivement une horloge interne (C1, ..., CN) qui est réglée avec une fréquence d'horloge de nœud (fs) associée au nœud de réseau respectif (S1, ..., SN),
- configuré pour transmettre des messages de synchronisation (SM) qui servent à la synchronisation temporelle des horloges internes (C1, ..., CN) des nœuds de réseau (S1, ..., SN),
- configuré pour transmettre les messages de synchronisation (SM) successivement d'un nœud de réseau précédent ($S_{i-1}$) à un nœud de réseau intermédiaire ($S_i$) et de celui-ci à un nœud de réseau suivant ($S_{i+1}$) en fonction d'une fréquence d'horloge de référence (fm) spécifiée par une horloge de référence (CM), les messages de synchronisation (SM) contenant l'état de comptage de cycles d'horloge de référence (CMT) de l'horloge de référence (CM) ;
- le nœud de réseau précédent ($S_{i-1}$), le nœud de réseau intermédiaire ($S_i$) et le nœud de réseau suivant ($S_{i+1}$) étant configurés pour calculer respectivement, à intervalles de temps donnés, une déviation de synchronisation ($\Delta S_{i-1}$, $\Delta S_i$, $\Delta S_{i+1}$) ;
- le nœud de réseau intermédiaire ($S_i$) étant configuré pour exécuter l'algorithme suivant, dans la mesure où sa déviation de synchronisation déterminée en dernier lieu ($\Delta S_i$) dépasse une valeur seuil :

-- détection d'une modification de la fréquence d'horloge de référence (fm), dans la mesure où les déviations de synchronisation ($\Delta S_{i-1}$, $\Delta S_i$, $\Delta S_{i+1}$) qu'ont calculées le nœud de réseau précédent ($S_{i-1}$), le nœud de réseau intermédiaire ($S_i$) et le nœud de réseau suivant ($S_{i+1}$) sont similaires entre elles, sinon,
-- détection d'une modification de la fréquence d'horloge de nœud (fs) du nœud de réseau intermédiaire ($S_i$), dans la mesure où les déviations de synchronisation ($\Delta S_{i-1}$, $\Delta S_{i+1}$) qu'ont calculées le nœud de réseau précédent ($S_{i-1}$) et le nœud de réseau suivant ($S_{i+1}$) sont similaires entre elles.

7.  Réseau de communication selon la revendication 6, dans lequel le nœud de réseau intermédiaire ($S_i$) contient ou consiste en une carte de réseau, et plus particulièrement une carte de réseau avec une propre horloge temps réel et une unité d'horodatage.

8.  Support de données lisible par ordinateur sur lequel est stocké un programme informatique qui exécute le procédé selon l'une des revendications 1 à 5 lorsqu'il est exécuté dans un microprocesseur.

9.  Programme informatique qui est exécuté dans un microprocesseur tout en exécutant le procédé selon l'une des revendications 1 à 5.

# FIG 1

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2034642 A1

- EP 2299614 A2

**In der Beschreibung aufgeführte Nicht-Patentliteratur**

- **R. LUPAS SCHEITERER ; C. NA ; D. OBRADOVIC ; G. STEINDL.** Synchronization Performance of the Precision Time Protocol in Industrial Automation Networks. *ISPCS07 Special Issue of the IEEE Transactions on Instrumentation and Measurement,* Juni 2009, vol. 58 (6), 1849-1857

- **ANDREA BONDAVALLI et al.** Master Failure Detection Protocol in Internation Synchronization Evnironment. *IEEE Transactions on Instrumentation and Meansurements,* Januar 2013, vol. 62 (1